# EUROPÄISCHE PATENTSCHRIFT

(11) **EP 1 758 705 B1**
(45) Veröffentlichungstag und Bekanntmachung des Hinweises auf die Patenterteilung: **29.10.2008**
(21) Anmeldenummer: 05753213.7
(22) Anmeldetag: 16.06.2005
(51) Int. Cl.: B23K 20/12

(54) **REIBSCHWEISSMASCHINE UND BETRIEBSVERFAHREN**
FRICTION WELDING MACHINE AND METHOD FOR OPERATING THE SAME
MACHINE DE SOUDAGE PAR FRICTION ET PROCEDE DE FONCTIONNEMENT

(30) Priorität: 23.06.2004 DE 202004009909 U
(43) Veröffentlichungstag der Anmeldung: 07.03.2007
(73) Patentinhaber: KUKA Systems GmbH, 86165 Augsburg (DE)
(72) Erfinder: SEMMLINGER, Wolfgang, 86157 Augsburg (DE); FISCHER, Otmar, 86150 Augsburg (DE); ZOTT, Günter, 86450 Altenmünster (DE); HUBER, Rudolf, 81245 München (DE)
(74) Vertreter: Ernicke, Klaus Stefan
(86) Internationale Anmeldenummer: PCT/EP2005/006447
(87) Internationale Veröffentlichungsnummer: WO 2006/000330

(56) Entgegenhaltungen:
- US-A- 3 377 009
- US-A- 3 439 853
- US-A- 3 954 215
- US-A- 4 030 658
- US-A- 4 733 814

## Beschreibung

Die Erfindung betrifft eine Reibschweißmaschine und ein Betriebsverfahren mit den Merkmalen im Oberbegriff des Verfahrens- und Vorrichtungshauptanspruchs.

Die US 3,954,215 A zeigt eine Doppelspindel-Reibschweißmaschi.ne zum Schweißen von zwei Werkstücken. Die Maschine hat ein Gestell mit zwei Spindeln und zwei Werkstückhaltern sowie zwei Spindelantrieben, wobei der zweite Spindelantrieb axial beweglich und angetrieben am Gestell gelagert ist. Die Spindeln sind im Bereich zwischen den Werkstückhaltern und den Motoren geteilt und weisen eine mitdrehende, ausrückbare Kupplung und eine Bremseinrichtung für einen Spindelabschnitt auf. Der Vorschubantrieb am zweiten Spindelstock sorgt für die Zustellung, den Reibvorschub und den Stauchhub der Werkstücke. Diese und die anderen bekannten Reibschweißmaschinen sind für bestimmte Werkstückgrößen ausgelegt und haben einen begrenzten Einsatzbereich. Für stark unterschiedliche Werkstückgrößen sind verschiedene Reibschweißmaschinen erforderlich.

Aus der US 4,733,814 A ist eine Doppelkopf-Reibschweißmaschine mit zwei Spindeln nebst Werkstückhaltern und einem zentralen zweiseitigen Spannfutter für die Reibschweißverbindung von zwei Werkstückpaarungen bekannt. Die Spindeln werden durch einen gemeinsamen Motor mit einer Vorgelegewelle und einem Getriebezug zusammen angetrieben. Zur Vebindung der zwei Werkstückpaarungen müssen beide Spindeln rotieren.

Die US 3,377,009 A offenbart eine konventionelle Reibschweißmaschine mit einer einzigen Spindel nebst Werkstückhalter und einem drehfest gehaltenen zweiten Werkstückhalter mit Vorschubantrieb. Die Spindel besitzt eine Kegelrollenlagerung.

Die US 4,030,658 A lehrt eine Reibschweißmaschine mit nur einer drehenden Spindel und mit variablen Schwungmassen.

Die Erfindung hat zur Aufgabe, eine bessere Reibschweißtechnik aufzuzeigen.

Die Erfindung löst diese Aufgabe mit den Merkmalen im Verfahrens- und Vorrichtungshauptanspruch.
Die beanspruchte Doppelspindelmaschine und das Betriebsverfahren haben den Vorteil eines vergrößerten Einsatzbereichs. Sie ist für eine wesentlich größere Bandbreite von Werkstückgrößen geeignet. Dies kommt auch den Genauigkeiten zugute.

Die Spindeldurchmesser können gleich oder unterschiedlich groß sein. Die kleinere Spindel für die kleineren Bauteile kann genauer gelagert werden als die große Spindel und bietet eine entsprechend höhere Präzision.

Um den hohen Stauchkräften und Drehmomenten Stand zu halten, ist mindestens eine Überbrückungen vorhanden, welche einen Werkstückhalter am Gehäuse des Spindelstocks vorzugsweise formschlüssig abstützt und die Spindel entlastet. Dies bietet vor allem bei der kleineren Spindel Vorteile, ist aber auch bei gleich großen Spindeln günstig. Die Überbrückung kann wechselbar sein und sich wahlweise an der einen oder der anderen Spindel oder am Spindelstock anbringen lassen. Die Überbrückung ist mit einem fest an einem Tragkörper montierten Werkstückhalter versehen, der gegen den spindelseitigen abnehmbaren Werkstückhalter getauscht wird.

Die beanspruchte Reibschweißmaschine bietet ferner Vorteile für die Steuerung und Beeinflussung des Reibschweißprozesses. Die beiden Spindeln können gegenläufig drehen, so dass die an der Reibstelle wirksame Drehgeschwindigkeit größer als bei bisherigen Maschinen sein kann. Andererseits können durch die Geschwindigkeitsaddierung die Einzelgeschwindigkeiten der beiden Spindeln verringert werden, was einerseits eine Verkleinerung der Spindelantriebe ermöglicht und andererseits ein schnelleres Bremsen gestattet. Der Reibschweißprozess kann entsprechend feinfühliger und genauer gesteuert werden. Auch für die Winkelpositionierung der Werkstücke in der Schweißposition ergeben sich Vorteile. Mit der ortsfest abgestützten Überbrückung kann ein Werkstück unter Abkopplung von der Spindel drehfest gehalten werden.

Trotz der durch die doppelten Spindeln vergrößerten Einsatz- und Werkstückbereiche kommt die Reibschweißmaschine mit einem einheitlichen Vorschubantrieb aus, der alle Einsatzbereiche abdeckt.

Die Antriebstechnik für die zwei Spindeln und die Spindelstöcke können gleichartig oder unterschiedlich ausgebildet sein. Über einstellbare oder ankuppelbare Schwungmassen können die Einsatzbereiche der Spindelantriebe ebenfalls erweitert und an unterschiedliche Größen und Massen von Werkstücken angepasst werden. Die Reibschweißmaschine kann dabei wahlweise mit Direktantrieben oder mit Schwungmassenantrieben gefahren werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Eine Doppelspindel-Reibschweißmaschine in einer schematischen Seitenansicht,
- Figur 2:: eine Variante der Reibschweißmaschine von Figur 1 mit Schwungmassenantrieben und einer Überbrückung zum Schweißen großer Werkstücke,
- Figur 3:: eine abgebrochene Darstellung der Spindeln in der Variante zum Schweißen kleiner Werkstücke und
- Figur 4:: eine Überbrückung in Seitenansicht.

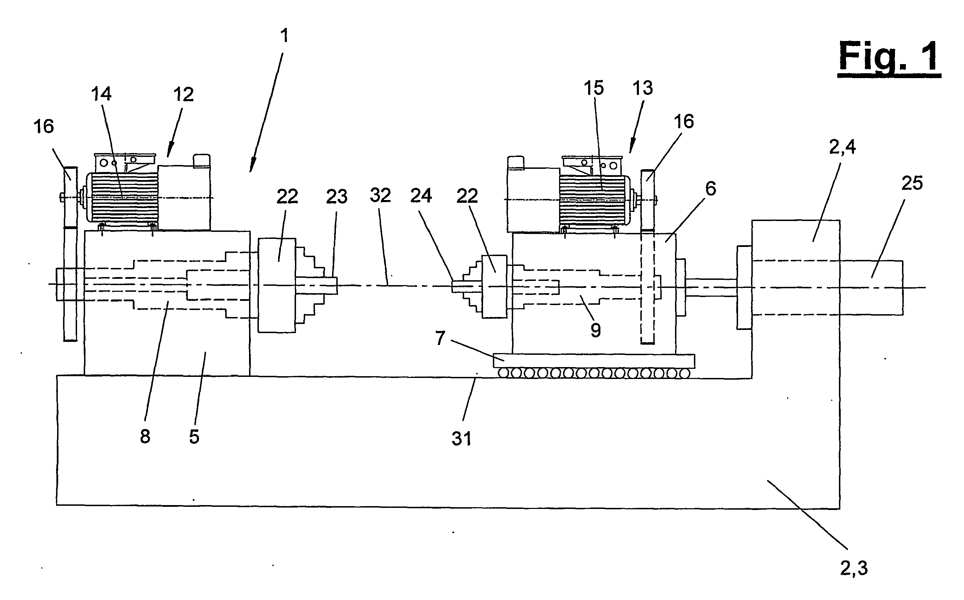

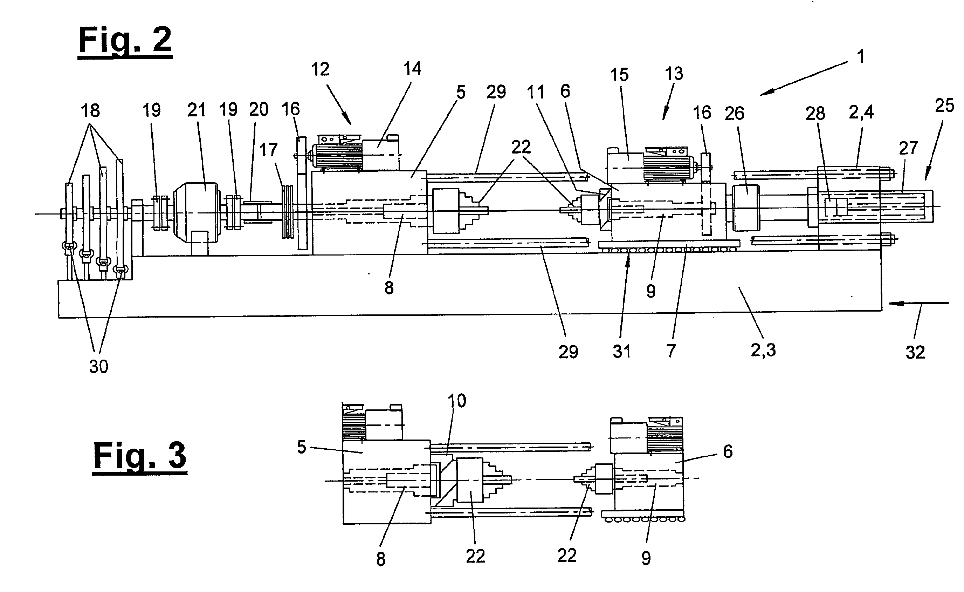

Figur 1 und 2 zeigen eine Reibschweißmaschine (1) in der Ausbildung als Doppelspindelmaschine und in zwei Bauvarianten, die sich hinsichtlich der Spindelantriebe (12,13) unterscheiden.

Die Reibschweißmaschine (1) besteht in beiden Fällen aus einem Gestell (2), welches ein Maschinenbett (3) und am einen Ende einen aufrechten Ständer (4) aufweist. Auf dem Gestell (2) ist auf der einen Seite ein erster, vorzugsweise stationärer Spindelstock (5) oder Spindelkopf ortsfest gelagert, der eine Spindel (8) mit einem Werkstückhalter (22), vorzugsweise einem Spannfutter, und einem Spindelantrieb (12) aufweist. Das Spannfutter (22) nimmt das erste Werkstück (23) auf.

Dem ersten stationären Spindelstock (5) mit Abstand gegenüber liegend ist ein zweiter Spindelstock (6) oder Spindelkopf mit einer zweiten Spindel (9) und einem eigenen Spindelantrieb (13) sowie einem zweiten Werkstückhalter (22) zur Aufnahme des zweiten Werkstücks (24) angeordnet. Der zweite Spindelstock (6) ist mittels eines Fahrschlittens (7) beweglich am Gestell (2), insbesondere am Maschinenbett (3), gelagert. Der zweite Spindelstock (6) ist an der Rückseite mit einem Vorschubantrieb (25) verbunden.

Der zweite, bewegliche Spindelstock (6) hat in der gezeigten Ausführung eine im Durchmesser kleinere und weniger belastbare Spindel (9) und vorzugsweise auch einen schwächeren Spindelantrieb (13) als der stationäre Spindelstock (5). Die kleinere Spindel (9) ist entsprechend genauer gelagert als die große Spindel (8). Die Spindeln (8,9) nebst Spannfuttern (22) haben eine gemeinsame Zentralachse, mit der auch der Vorschubantrieb (25) fluchtet.

In Abwandlung zur gezeigten Ausführungsform kann die zweite Spindel (9) die gleiche Größe und die gleiche Lagerung wie die erste Spindel (8) aufweisen. Auch die Spindelantriebe (12,13) können gleichartig und in gleicher Stärke und Belastbarkeit ausgelegt sein. Die Gleichartigkeit der Spindelantriebe (12,13) kann in einer weiteren Variation auch bei unterschiedlichen Spindeln (8,9) gegeben sein.

Der Fahrschlitten (7) ist längs der Vorschubrichtung (32) mittels einer Schlittenführung (31) am Gestell (2) bzw. Maschinenbett (3) formschlüssig gelagert und geführt. Die Lagerung nimmt die eventuell einwirkenden Kippmomente auf.

Der Vorschubantrieb (25) ist hinter dem beweglichen Spindelstock (6) am besagten Ständer (4) angeordnet und abgestützt. Der Vorschubantrieb (25) sorgt einerseits für die schnelle Zustellung des beweglichen Spindelstocks (6) aus der in Figur 1 gezeigten zurückgezogenen Ruhestellung in die vorgeschobene Arbeitsstellung, in der die beiden Werkstücke (23,24) in fluchtenden Reibkontakt gebracht und gegeneinander verdreht werden. Der Vorschubantrieb (25) besorgt ferner den Reibvorschub und schließlich auch den Stauchhub, mit dem die Werkstücke (23,24) schlagartig verbunden werden. Der Vorschubantrieb (25) kann in beliebig geeigneter Weise ausgebildet sein. Im gezeigten und in Figur 2 näher dargestellten Ausführungsbeispiel weist er zwei hydraulische Zylinder (26,28) auf. Der in Vorschubrichtung hinten liegende Zylinder (28) ist ein Eilgangzylinder. Der vordere Zylinder (26) ist ein Stauchzylinder, der mit einer Stauchstange (27) verbunden ist. Alternativ kann der Vorschubantrieb (25) auch ein elektromotorischer Antrieb sein oder eine beliebige andere konstruktive Ausgestaltung haben.

Zur Abstützung der hohen Stauchkräfte, die z.B. zwischen 20 und 100 Tonnen oder darüber liegen können, sind der stationäre Spindelstock (5) und der Ständer (4) durch ein oder mehrere axiale Zuganker (29) in Vorschub- und Stauchrichtung (32) miteinander verbunden und gegenseitig abgestützt. Hierdurch kann das Gestell (2) entlastet werden.

Die Spindelantriebe (12,13) können in beliebig geeigneter und gegebenenfalls auch in unterschiedlicher Weise ausgebildet sein. Im gezeigten Ausführungsbeispiel besitzen beide Spindelantriebe (12,13) einen elektrischen steuerbaren Antriebsmotor (14,15), der über ein Vorgelege (16) auf die zugehörige Spindel (8,9) einwirkt. Im Ausführungsbeispiel von Figur 1 ist dies ein direkter Antrieb, wobei das Vorgelege (16) mit der jeweiligen Spindel (8,9) direkt gekoppelt ist.

Figur 2 zeigt eine Variante der Antriebsausbildung mit einer wahlfreien Einschaltmöglichkeit für ein oder mehrere Schwungmassen (17,18). Die Schwungmassen (17,18) können bei Bedarf abgekoppelt sein, so dass der vorerwähnte Direktantrieb besteht.

Beim beweglichen Spindelstock (6) mit der kleineren Spindel (9) und dem kleineren Spannfutter (22) können ein oder zwei oder gegebenenfalls auch mehr einstellbare Schwungmassen (17) koaxial zur Spindel (9) angeordnet sein. Die Schwungmassen (17) können einzeln oder gemeinsam über eine entsprechende Kupplung zugeschaltet und mit der Spindel (9) verbunden werden.

Beim stationären Spindelstock (5) mit der großen Spindel (8) sind mehr Schwungmassen (17,18) vorhanden, die auch eine größere Bandbreite an Zuschaltmöglichkeiten bieten. Am rückwärtigen Ende der Spindel (8) sind in ähnlicher Weise wie beim kleineren Spindelstock (6) zwei oder mehr einstellbare Schwungmassen angeordnet, die direkt mit dem rückwärtigen Ende der Spindel (8) verbunden werden können. Die große Spindel (8) kann ferner am rückwärtigen Ende in einem weiteren Ständerteil gelagert und mittels einer schaltbaren Kupplungseinrichtung (20) mit einem nachgeschalteten Getriebe (21) verbunden werden. Hierbei kann eine drehsteife Verbindung (19) zwischengeschaltet sein. Das Getriebe (21) ist am rückwärtigen Ende seinerseits über eine weitere drehsteife Verbindung (19) mit einer Anordnung von mehreren zusätzlichen Schwungmassen (18) verbunden, die als einzeln zuschaltbare Schwungscheiben unterschiedlicher Größe und Masse ausgebildet sind. Mittels Haltebremsen (30) können die einzelnen Schwungmassen (18) bei Bedarf gebremst und festgesetzt werden.

Eine oder beide Spindeln (8,9) sind mit Überbrückungen (10,11) ausgerüstet, die zwischen die Werkstückhalter oder Spannfutter (22) und die angrenzende Wandung des Spindelstocks (5,6) eingesetzt werden und hierbei die auf das Spannfutter (22) wirkenden Stauch- und Druckkräfte F sowie Drehmomente M zur Entlastung der zugehörigen Spindel (8,9) am Spindelstockgehäuse abstützen. Die Überbrückungen (10,11) sind jeweils an der ruhenden Spindel (8,9) angeordnet.

Figur 2 zeigt die Ausführungsform zum Schweißen großer und schwerer Werkstücke (23,24). Bei dieser Variante dreht die große Spindel (8) am stationären Spindelstock (5). Hierbei ist die gegenüberliegende kleine Spindel (9) durch die Überbrückung (11) gehäusefest abgestützt und entlastet. Die Überbrückung (11) kann hierbei auch das Spannfutter (22) gegebenenfalls drehfest halten.

In der Variante von Figur 3 ist die andere Anordnung zum Schweißen kleinerer Werkstücke (23,24) dargestellt. In diesem Fall dreht die kleinere Spindel (9) am beweglichen Spindelstock (6). Am größeren stationären Spindelstock (5) ist eine Überbrückung (10) zwischen Spannfutter (22) und Spindelstockgehäuse angeordnet, die die große Spindel (8) entlastet.

Eine Doppelspindel-Reibschweißmaschine (1) kann in verschiedenen Betriebsmodi betrieben werden. In den konventionellen Modi dreht nur eine Spindel (8,9), während die jeweils andere Spindel (9,8) durch eine Bremse drehfest gehalten wird. Dementsprechend wird nur der jeweils drehende Spindelantrieb (12,13) von der Maschinen- und Prozesssteuerung (nicht dargestellt) angesteuert. In einem dritten Modus ist es möglich, beide Spindeln (8,9) drehen zu lassen, was z.B. gegenläufig geschieht. Hierdurch addieren sich die entgegengesetzten Geschwindigkeiten an der Reibstelle zu einer hohen relativen Drehgeschwindigkeit der Werkstücke (23,24). Am Ende des Reibvorgangs und vor dem Stauchhub werden dementsprechend beide Spindeln (8,9) gebremst, wobei durch die Reduzierung der Einzeldrehzahlen geringere Bremskräfte erforderlich sind oder ein schnelleres Bremsen möglich ist. Bei den ersten beiden Betriebsmodi wird nur die eine jeweils drehende Spindel (8,9) am Ende des Reibvorgangs gebremst.

In weiterer Variation können bei Bedarf die Spindeln (8,9) auch gleichläufig rotieren, wobei bei Abschaltung eines Spindelantriebs (12,13) auch die Mitnahme der zugehörigen Spindel (8,9) im Reibschluss durch die andere angetriebene Spindel (9,8) erfolgt.

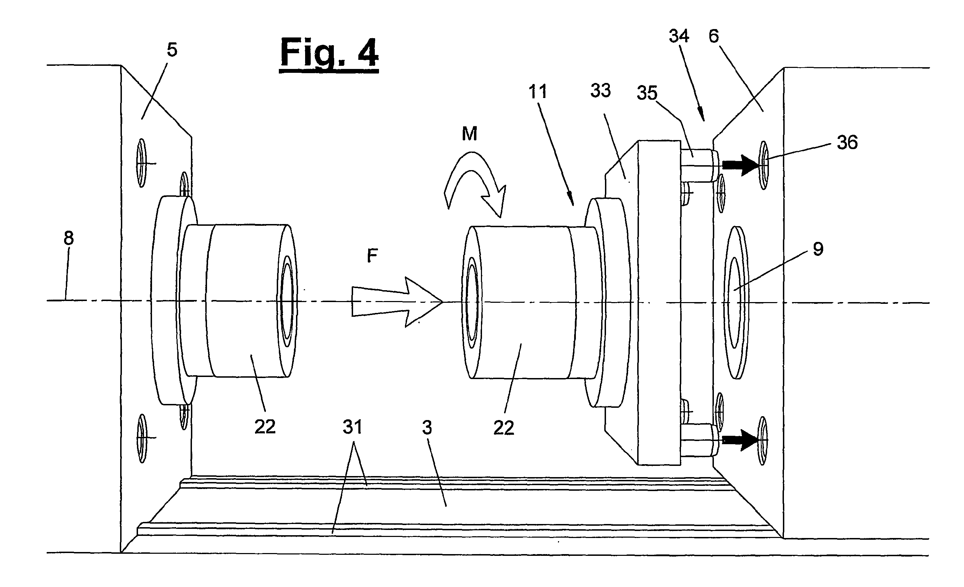

Figur 4 zeigt eine konstruktive Ausführungsform einer Überbrückung (11). Sie besteht aus einem z.B. plattenförmigen Tragkörper (33), an dessen Vorderseite eine Werkstückaufnahme (22) fest montiert ist. An der Rückseite ist eine formschlüssige Abstützung (34) zur Verbindung mit dem Spindelstock (5,6) vorhanden. Sie besteht z.B. aus den gezeigten vier nach rückwärts abstehenden Zapfen (35), die formschlüssig in entsprechende Aufnahmeöffnungen (36) am Spindelstock (5,6) greifen. Die axialen Stauch- oder Schweißkräfte F werden durch eine flächige Anlage des Tragkörpers (33) am Spindelstock (5,6) abgestützt. Die Abstützung des beim Reibschweißen entstehenden Drehmoments oder Schweißmoments M erfolgt durch die formschlüssige Abstützung (34). Die Spindel (8,9) wird nicht belastet. Die Verbindung der Überbrückung (11) und des Spindelstocks (5,6) kann mit einer Verriegelung (nicht dargestellt) gesichert werden.

Bei dieser Ausführungsform ist die Überbrückung (11) gegen den normalerweise an der Spindel (8,9) befindlichen Werkstückhalter (22) getauscht. Die Werkstückhalter (22) sind dazu lösbar an den Spindeln (8,9) befestigt und können zur Anbringung der Überbrückung (11) abgenommen werden. Die Spindeln (8,9) sind hierbei so in ihren Spindelstöcken (5,6) angeordnet und gelagert, dass sie mit ihren Vorderenden bei abgenommener Werkstückaufnahme (22) nicht oder nur wenig über die Stirnwand des Spindelstocks (5,6) axial vorstehen. Ansonsten kann der Tragkörper (33) an der Rückseite auch eine entsprechende Aufnahmeöffnung aufweisen. Nach der Abnahme der Werkstückaufnahme (22) von der Spindel (8,9) kann die Überbrückung (11) am Spindelstock (5,6) montiert und über das Spindelende gesetzt werden. Die Anordnung der Werkstückaufnahme (22) und der formschlüssigen Abstützung (34) an der Überbrückung (11) ist konzentrisch zu den fluchtenden Spindelachsen.

Die Werkstückaufnahmen (22) an den Spindeln (8,9) und an ein oder mehreren Überbrückungen (11) können im wesentlichen gleich ausgebildet sein. Dies ist günstig mit Hinblick auf eine gegenseitige Austauschbarkeit der Werkstückaufnahmen (22) an den Spindeln (8,9). Außerdem kann die gleiche Überbrückung (11) wahlweise am einen oder am anderen Spindelstock (5,6) angebaut werden. Hierfür haben die Spindelstöcke (5,6) auch gleichartige Komponenten der formschlüssigen Aufnahme (34). Vorteilhaft ist auch eine Vereinheitlichung der Verbindungen zwischen den Spindeln (8,9) und den Werkstückaufnahmen (22). Dies ermöglicht einen gegenseitigen Tausch der Werkstückaufnahmen (22). Außerdem können verschiedene Arten und Größen von Werkstückaufnahmen (22) wahlweise an der einen oder der anderen Spindel (8,9) angebracht werden.

Abwandlungen der gezeigten Ausführungsformen sind in verschiedener Weise möglich. Dies betrifft die konstruktive Ausgestaltung der Spindelstöcke (5,6), ihre Spindeln (8,9) und ihre Spindelantriebe (12,13). Auch der Vorschubantrieb (25) kann variiert werden. Je nach Größe der Stauchkräfte kann auf die Zuganker (29) zugunsten einer Kräfteabstützung über das Gestell (2) verzichtet werden. Variabel sind ferner die Größenverhältnisse in den unterschiedlichen Durchmessern der kleinen und großen Spindel (8,9). Der erste Spindelstock (5) kann beweglich und arretierbar am Gestell (2) gelagert sein. Abwandelbar ist ferner die Ausgestaltung der Überbrückungen (11). Dies betrifft die Form und Anordnung der Tragkörper (33) und der formschlüssigen Abstützung (34), wobei insbesondere die Zuordnung von Zapfen (35) und Aufnahmeöffnungen (36) umgedreht sein kann. Ferner ist jede andere beliebige Art von Abstützung, ggf. auch rein kraftschlüssige Abstützung, möglich. Ferner kann die Überbrückung (11) auch unter Belassung der Werkstückaufnahme (22) an der Spindel (8,9) durch einen Einschub oder Schuh realisiert werden, der in den Spalt zwischen der Rückseite der Werkstückaufnahme (22) und der Stirnseite des Spindelstocks (5,6) eingebracht wird und mit entsprechenden, vorzugsweise formschlüssigen Abstützungen an beiden Teilen zusammen wirkt. Auf diese Weise stützt sich die Werkstückaufnahme (22) druck- und drehfest am Spindelstock (5,6) ab und entlastet die Spindel (8,9). Hierbei kann ggf. die Verbindung zwischen der Spindel (8,9) und der Werkstückaufnahme (22) gelockert oder geöffnet werden.

### BEZUGSZEICHENLISTE

- 1: Reibschweißmaschine
- 2: Gestell
- 3: Maschinenbett
- 4: Ständer
- 5: Spindelstock groß
- 6: Spindelstock klein
- 7: Fahrschlitten
- 8: Spindel groß
- 9: Spindel klein
- 10: Überbrückung große Spindel
- 11: Überbrückung kleine Spindel
- 12: Spindelantrieb groß
- 13: Spindelantrieb klein
- 14: Antriebsmotor
- 15: Antriebsmotor
- 16: Vorgelege, Getriebe
- 17: Schwungmasse einstellbar
- 18: Schwungmasse zusätzlich
- 19: Verbindung
- 20: Kupplungseinrichtung
- 21: Getriebe, Planetengetriebe
- 22: Werkstückaufnahme, Spannfutter
- 23: Werkstück
- 24: Werkstück
- 25: Vorschubantrieb
- 26: Zylinder, Stauchzylinder
- 27: Stauchstange
- 28: Zylinder, Eilgangzylinder
- 29: Zuganker
- 30: Haltebremse
- 31: Schlittenführung
- 32: Vorschubrichtung
- 33: Tragkörper, Tragplatte
- 34: Abstützung
- 35: Zapfen
- 36: Öffnung

## Patentansprüche

1. Reibschweißmaschine mit einem Gestell (2), mit einem Spindelstock (5), der eine Spindel (8) mit einem Werkstückhalter (22) und einem Spindelantrieb (12) aufweist, und mit einem Vorschubantrieb (25) mit einem zweiten Werkstückhalter (22), wobei die Reibschweißmaschine (1) einen zweiten Spindelstock (6) mit einer Spindel (9), einem Spindelantrieb (13) und dem zweiten Werkstückhalter (22) aufweist, wobei der zweite Spindelstock (6) axial beweglich am Gestell (2) gelagert und mit dem Vorschubantrieb (25) verbunden ist, **dadurch gekennzeichnet, dass** zumindest ein Werkstückhalter (22) eine die Stauchkraft und das Drehmoment ortsfest abstützende und die Spindel entlastende Überbrückung (10,11) aufweist.

2. Reibschweißmaschine nach Anspruch 1, **dadurch gekennzeichnet, dass** der erste Spindelstock (5) stationär am Gestell (2) angeordnet ist.

3. Reibschweißmaschine nach Anspruch 1 oder 2, **dadurch gekennzeichnet, dass** die Spindeln (8,9) unterschiedliche Größen aufweisen, wobei die Spindel (9) des zweiten Spindelantriebs (13) kleiner als die andere Spindel (8) ist.

4. Reibschweißmaschine nach einem der vorhergehenden Ansprüche, **dadurch gekennzeichnet, dass** an der Überbrückung (10,11) ein Werkstückhalter (22) fest montiert ist.

5. Reibschweißmaschine nach einem der vorhergehenden Ansprüche, **dadurch gekennzeichnet, dass** die Überbrückung (10,11) einen Tragkörper (33) und eine formschlüssige Abstützung (34) zur Verbindung mit mindestens einem Spindelstock (5,6) aufweist.

6. Reibschweißmaschine nach einem der vorhergehenden Ansprüche, **dadurch gekennzeichnet, dass** die formschlüssige Abstützung (34) ineinander greifende Zapfen (35) und Öffnungen (36) am Tragkörper (33) und am Spindelstock (5,6) aufweist.

7. Reibschweißmaschine nach einem der vorhergehenden Ansprüche, **dadurch gekennzeichnet, dass** zumindest ein Werkstückhalter (22) lösbar mit einer Spindel (8,9) verbunden ist.

8. Reibschweißmaschine nach einem der vorhergehenden Ansprüche, **dadurch gekennzeichnet, dass** die Spindeln (8,9) und die Überbrückung (10,11) gleichartige Werkstückhalter (22) aufweisen.

9. Reibschweißmaschine nach einem der vorhergehenden Ansprüche, **dadurch gekennzeichnet, dass** der zweite Spindelstock (6) einen Fahrschlitten (7) aufweist, der an einer Schlittenführung (31) am Gestell (2) längs der Vorschubrichtung (32) formschlüssig gelagert und geführt ist.

10. Reibschweißmaschine nach einem der vorhergehenden Ansprüche, **dadurch gekennzeichnet, dass** mindestens ein Spindelantrieb (12,13) einstellbare Schwungmassen (17) aufweist, wobei vorzugsweise der stationäre Spindelantrieb (12) ein oder mehrere ankuppelbare zusätzliche Schwungmassen (18) aufweist.

11. Verfahren zum Betrieb einer Reibschweißmaschine (1) mit mehreren Spindelstöcken (5,6) mit Spindeln (8,9), Spindelantrieben (12,13) und Werkstückaufnahmen (22) sowie einem Vorschubantrieb (25) für einen beweglich gelagerten Spindelstock (6), **dadurch gekennzeichnet, dass** im Schweißbetrieb eine Spindel (8,9) mit einer ortsfest abgestützten Überbrückung (11) von den axialen Stauch- und Schweißkräften F und dem Drehmoment M entlastet wird.

12. Verfahren nach Anspruch 11, **dadurch gekennzeichnet, dass** die Werkstückaufnahme (22) von der zu entlastenden Spindel (8,9) abgenommen wird, wobei die Überbrückung (11) mit einer daran befestigten Werkstückaufnahme (22) über die Spindel (8,9) gesetzt und mittels einer Abstützung (34) mit dem Spindelstock (5,6) verbunden wird.

## Claims

1. Friction welding machine comprising a frame (2), comprising a headstock (5) which has a spindle (8) with a work holder (22) and a spindle drive (12), and comprising a feed drive (25) having a second work holder (22), wherein the friction welding machine (1) has a second headstock (6) with a spindle (9), a spindle drive (13) and the second work holder (22), wherein the second headstock (6) is mounted on the frame (2) in an axially movable manner and is connected to the feed drive (25), **characterized in that** at least one work holder (22) has a bridge (10, 11) which absorbs the upsetting force and the torque in a stationary manner and relieves the spindle.

2. Friction welding machine according to Claim 1, **characterized in that** the first headstock (5) is arranged on the frame (2) in a fixed position.

3. Friction welding machine according to Claim 1 or 2, **characterized in that** the spindles (8, 9) have different sizes, the spindle (9) of the second spindle drive (13) being smaller than the other spindle (8).

4. Friction welding machine according to one of the preceding claims, **characterized in that** a work holder (22) is fixedly mounted on the bridge (10, 11).

5. Friction welding machine according to one of the preceding claims, **characterized in that** the bridge (10, 11) has a supporting body (33) and a positive-locking support (34) for connecting to at least one headstock (5, 6).

6. Friction welding machine according to one of the preceding claims, **characterized in that** the positive-locking support (34) has engaging pins (35) and openings (36) on the supporting body (33) and on the headstock (5, 6).

7. Friction welding machine according to one of the preceding claims, **characterized in that** at least one work holder (22) is detachably connected to a spindle (8, 9).

8. Friction welding machine according to one of the preceding claims, **characterized in that** the spindles (8, 9) and the bridge (10, 11) have work holders (22) of the same kind.

9. Friction welding machine according to one of the preceding claims, **characterized in that** the second headstock (6) has a travelling slide (7) which is mounted and guided in a positive-locking manner in the feed direction (32) on a slide guide (31) on the frame (2).

10. Friction welding machine according to one of the preceding claims, **characterized in that** at least one spindle drive (12, 13) has adjustable flywheel masses (17), wherein preferably the stationary spindle drive (12) has one or more additional flywheel masses (18) that can be coupled.

11. Method of operating a friction welding machine (1) comprising a plurality of headstocks (5, 6) with spindles (8, 9), spindle drives (12, 13) and work holders (22) and also comprising a feed drive (25) for a movably mounted headstock (6), **characterized in that,** during the welding operation, a spindle (8, 9) having a bridge (11) supported in a fixed position is relieved of the axial upsetting and welding forces F and the torque M.

12. Method according to Claim 11, **characterized in that** the work holder (22) is removed from the spindle (8, 9) to be relieved, wherein the bridge (11) having a work holder (22) fastened thereto is placed over the spindle (8, 9) and is connected to the headstock (5, 6) by means of a support (34).

## Revendications

1. Machine de soudage par friction comprenant un bâti (2), avec une poupée de machine (5) qui présente une broche (8) avec un porte-pièce (22) et un entraînement de broche (12), et comprenant un entraînement d'avance (25) avec un deuxième porte-pièce (22), la machine de soudage par friction (1) présentant une deuxième poupée de machine (6) avec une broche (9), un entraînement de broche (13) et le deuxième porte-pièce (22), la deuxième poupée de machine (6) étant montée sur le bâti (2) de manière déplaçable axialement et étant connectée à l'entraînement d'avance (25),
**caractérisée en ce qu'**au moins un porte-pièce (22) présente un pontage (10, 11) supportant fixement la force de compression et le couple et déchargeant la broche.

2. Machine de soudage par friction selon la revendication 1, **caractérisée en ce que** la première poupée de machine (5) est stationnaire sur le bâti (2).

3. Machine de soudage par friction selon la revendication 1 ou 2, **caractérisée en ce que** les broches (8, 9) présentent des tailles différentes, la broche (9) du deuxième entraînement de broche (13) étant plus petite que l'autre broche (8).

4. Machine de soudage par friction selon l'une quelconque des revendications précédentes, **caractérisée en ce qu'**un porte-pièce (22) est monté fixement sur le pontage (10, 11).

5. Machine de soudage par friction selon l'une quelconque des revendications précédentes, **caractérisée en ce que** le pontage (10, 11) présente un corps porteur (33) et un support (34) par engagement par coopération géométrique pour la connexion à au moins une poupée de machine (5, 6).

6. Machine de soudage par friction selon l'une quelconque des revendications précédentes, **caractérisée en ce que** le support (34) par engagement par coopération géométrique présente des tourillons (35) et des ouvertures (36) s'engageant les uns dans les autres sur le corps porteur (33) et sur la poupée de machine (5, 6).

7. Machine de soudage par friction selon l'une quelconque des revendications précédentes, **caractérisée en ce qu'**au moins un porte-pièce (22) est connecté de manière détachable à une broche (8, 9).

8. Machine de soudage par friction selon l'une quelconque des revendications précédentes, **caractérisée en ce que** les broches (8, 9) et le pontage (10, 11) présentent des porte-pièces (22) de même type.

9. Machine de soudage par friction selon l'une quelconque des revendications précédentes, **caractérisée en ce que** la deuxième broche de machine (6) présente un chariot déplaçable (7), qui est monté par engagement par coopération géométrique sur un guide-chariot (31) sur le bâti (2) et guidé le long de la direction d'avance (32).

10. Machine de soudage par friction selon l'une quelconque des revendications précédentes, **caractérisée en ce que** l'au moins un entraînement de broche (12, 13) présente des masses d'inertie ajustables (17), l'entraînement de broche stationnaire (12) présentant de préférence une ou plusieurs masses d'inertie supplémentaires pouvant être accouplées (18).

11. Procédé pour faire fonctionner une machine de soudage par friction (1) avec plusieurs poupées de machine (5, 6), comprenant des broches (8, 9), des entraînements de broche (12, 13) et des porte-pièces (22) ainsi qu'un entraînement d'avance (25) pour une poupée de machine (6) montée mobile, **caractérisé en ce qu'**une broche (8, 9) est déchargée des forces axiales de compression et de soudage F et du couple M pendant le mode de soudage avec un pontage (11) supporté fixement.

12. Procédé selon la revendication 11, **caractérisé en ce que** le porte-pièce (22) est reçu par la broche (8, 9) à décharger, le pontage (11), avec un porte-pièce (22) fixé dessus, étant placé pardessus la broche (8, 9) et étant connecté au moyen d'un support (34) à la poupée de machine (5, 6).
